# EUROPEAN PATENT APPLICATION

(11) **EP 2 005 846 A1**
(43) Date of publication of application: **24.12.2008**
(21) Application number: 07110516.7
(22) Date of filing: 19.06.2007
(51) Int. Cl.: A23L 3/00, A23N 12/02, A23N 12/06, A23N 15/06, A47J 43/24, B08B 3/08

(54) **Water-saving type fruit and vegetable washing and disinfecting method and device**

(71) Applicant: Wang, Ching-hua, Taishan Shiang, Taipei County (CN)
(72) Inventor: Wang, Ching-hua, Taishan Shiang, Taipei County (CN)
(74) Representative: Meyer, Ludgerus

(57) **Abstract**

A water-saving type fruit and vegetable washing and disinfecting method and device, the washing process of which utilizes a middle water level spray wash combined with a water flow tumbling and swirling ozone wash. The wash trough bottom section has disposed a return flow water discharge port, a water discharge valve drain pipe, and numerous spray ports. Its bottom section also has disposed at the center a multi-orifice spray spindle; its lateral wall has disposed numerous spray ports. Disposed near the side wall of the bottom section is a return flow water input port. The device also consists of a return flow water pump, its water input port connected to the return flow water discharge port and its water output port connected to the return flow water input port; a return flow spray pump, its water input port connected to the return flow water discharge port and its water output port connected to numerous spray ports, lateral wall spray ports, and the multi-orifice spray spindle. When washing, the return flow water pump is started, the basket rotates in the direction of the water flow, the centered multi-orifice spray spindle and the wash trough spray ports emanate water flow and ozone bubbles to wash the fruits and vegetables, a water level controller utilized to set different water levels. The method also includes water input, drying, water drainage, and foreign matter elimination. As such, the present invention achieves water-saving washing that is an improvement over manual washing inadequacies.

## Description

### BACKGROUND OF THE INVENTION

The invention herein relates to disinfecting and washing methods and equipment, specifically a water-saving fruit and vegetable washing and disinfecting method and equipment.

### DESCRIPTION OF THE PRIOR ART

For most people, the washing of fruits and vegetables is typically accomplished by hand, first, for the difficult cleaning away of soil and other foreign matter between vegetable leaves or on fruit skins, especially coarse fruit and vegetable skins and, second, the elimination of residual agricultural chemical poisons on leaves or fruit skins that cannot be broken down, humans having long ingested agricultural chemical poison-contaminated fruits and vegetables which in serious cases immediately results in toxicosis and in milder cases chronic poisoning that gradually deteriorates the health of the human body, the degree of injury well imaginable. Moreover, in regions of cold climate, where water readily freezes, the washing of fruits and vegetables is quite inconvenient and, as a result, in view of the present human situation in which human health is subjected to an enduring threat due to the negative impact of technological development, extensive research was conducted to develop a fruit and vegetable washing and disinfecting device capable of the technological decomposition of agricultural chemicals and poisons, disinfection, and cleansing, in which after the fruits and vegetables undergo washing and immersion in the product herein, they are thoroughly cleansed and the agricultural chemicals and poisons are decomposed, totally eliminating harm to the human body and, furthermore, the fruits and vegetables themselves are kept fresh, completely improving the inconvenience and inadequacy shortcomings encountered when people wash fruits and vegetables, thereby providing utmost assistance to the protection of human heath.

Existent fruit and vegetable washing workflow can be divided into the continuous type and the discontinuous type, the continuous type utilizes a conveyor belt, or utilizes angled rotating cylinders on which the fruits and vegetables being washed are gradually forwarded; this kind of installation is generally used in continual mass production. Most households typically utilize the discontinuous type, the discontinuous type fruit and vegetable washing machine based on washing principles divided into brush washing and water flow washing, said brush washing is often used for harder surfaced fruits or vegetables such as apples and potatoes, etc.; however, the majority of fruit and vegetable washing machines utilized are water flow washing types, these including spray washing and water flow washing.

Examples of the spray washing types are:

China Patent No. 200320103005.4, entitled "Vegetable, Fruit, and Clothes Washing Machine" its features include: An ultraviolet light bulb installed in the upper cover of the outer tub, an inner tub having through-holes in its walls and mounted on a turntable by means of pins, an annular pipe having a quantity of orifices disposed at the upper end of the inner tub, the annular pipe coupled to a pipe through the center of the turntable and thereby connected to a water pump, the inner tub having at the extremity of its upper end a drive tab handle, the drive tab lock-linked by means of a cord and an impelling spring. Said machine has many functions as well as high efficiency usability characteristics. The water pump of said invention is connected, via a pipe through the center of the turntable, to the multi-orifice annular pipe disposed at the upper end of the inner tub such that water is delivered from the top to the bottom section of the multi-orifice annular pipe, water is then sprayed downward to wash fruits and vegetables from the annular pipe suspended overhead.

China Patent No. 200420040377.1, entitled "Water Pump-type Fruit and Vegetable Washing and Disinfecting Machine" is comprised of a case, electrical machinery, a drive mechanism, and a lower component chamber, the features of which include: A water pump installed in the case, the water pump input port is connected to the washing chamber, the water pump output port is connected to one or more water passages, and said water passage output port is at the top section of the washing chamber. Through the additional installation of the water pump, the pump pressure water flow produced enables water flow in the water passage to be pumped from the bottom to the top into a washing basket or the washing chamber, forming a waterfall-like water flow and thereby generating a solid, complex revolving water flow, the water flow in the washing chamber or the washing basket becomes a swirling water flow that effectively washes fruits and vegetables with increased washing efficiency.

China Patent No. 200420040376.7, entitled " Vegetable and Fruit Washing and Disinfecting Machine" is comprised of a case, a drive mechanism, a washing chamber inside the case, and a washing basket disposed in the washing chamber; the washing basket by means of an opening in its bottom base fits onto the drive mechanism shaft, the features of which include: A water flow mixing vane wheel between the washing chamber bottom surface and the washing basket bottom surface, said vane wheel mounted on the shaft. By additionally installing the vane wheel in the original washing and disinfecting machine, when washing, the vane wheel rotating at high speed generates pump pressure water flow, enabling water flow in the water passage to be pumped from the bottom to the top into the washing basket and creating a waterfall-like water flow, thereby generating a solid, complex water flow which is demonstrably effective, especially when washing sand off the root portion of vegetables, and increases washing efficiency.

In household-use fruit and vegetable washing machines, said water flow washing is accomplished primarily by means of a washing basket immersed in water that revolves, thereby enabling the cleaning method of the fruits and vegetables in the basket, and the basket is driven by manual, electric, and water power, for example:

China Patent No. 03270241.8, entitled "Vegetable Washing Machine" is a vegetable washing machine that utilizes an electromechanically powered basket.

China Patent No. 97211504.8, entitled "Fruit and Vegetable Cuisine Appliance with Built-in Washing Capability" is a vegetable washing machine that has a manually rotated basket.

China Patent No. 2004100229835.6, entitled "Vegetable and Fruit Washing Machine" is a vegetable and fruit washing machine that provides a water-powered basket. It is comprised of an outer case, a top cover, an inner tubular construct, and a water discharge valve, the technological strongpoint of which is: The inner tubular construct is supported inside the outer case, a washing basket having a water through-hole is disposed in the inner tubular construct, pump vanes are arrayed along the bottom section of the washing basket, and a rotating power output shaft is mounted to the center of the washing basket bottom section; a minimum of one vertical, outwardly recessed open-type water passage is disposed on the inner tubular construct and the top section of said water passage is connected to a spray nozzle that enables water to turn the washing basket. The prototype model of said invention demonstrated washing, disinfecting, and spin-drying capabilities that were extremely ideal, such that after washing the original freshness and tenderness of the vegetables and fruits remained unchanged, averting the damage to the vegetable and fruit surfaces due to rubbing while hand washing, and also eliminating in the process the tedious labor by washing personnel as well as the adverse effects to hand complexion because of long-term immersion in water. At the same time, other special features include a reasonable structure, convenient operation, the conserving of time and effort, environmental and health compatibility, long service life, and a broad scope of application.

The common existent problems of said fruit and vegetable washing machines and washing methods are:

1. The wasting of water, especially in the water flow type; with each instance of washing, the vegetables and fruits being washed must be immersed in the wash, the water is drained within a certain period of time after washing, following which water is again poured in to a height sufficient to submerge the vegetables and fruits that were not washed, and thus washed several times. For example, a washing machine having a wash tub with an inner diameter of 50cm and a height of 50cm; each time water is poured in to a level that is 2/3 the height of the wash tub, the volume of water utilized is 0.13M³; calculating for three washings, the washing of a type of basket requires using 0.39M³ of water; a household of three to four persons will utilize at minimum 1 M³ of water daily for washing vegetables and fruits. Since world water resources today are becoming scarcer and saving water is important for the sake of future generations, the providing of a water-saving fruit and vegetable machine is an objective pursued by this industry.

2. Regarding spray-type fruit and vegetable washing machines, the major problem that requires solution is the internal and external differences of the vegetables and fruits being washed; how to lessen the internal-external differences and shorten washing time.

### SUMMARY OF THE INVENTION

The objective of the invention herein is to address said inadequacies of the existent technology by providing a high efficiency, water-saving type fruit and vegetable washing and disinfecting method and device capable of breaking down agricultural chemicals and poisons, disinfection, and washing.

The technological means of the invention herein are disclosed below.

A fruit and vegetable washing and disinfecting method, wherein the fruits and vegetables being washed are placed within a washing basket inside a fruit and vegetable washing and disinfecting device to be washed and, furthermore, said washing basket rotates around its center axis, the features of which include: The wash process utilizes a middle water level as well as a spray wash used in combination with a water flow that tumbles and swirls to wash.

The features of said fruit and vegetable washing and disinfecting method include: Said middle water level reaches the exact height needed for the fruits and vegetables being washed to float in said water level; said spray wash is delivered multi-directionally and multi-angularly from the center of the group of fruits and vegetables being washed, washing the fruits and vegetable from all sides, and in combination the fruits and vegetables being washed revolve; said water flow tumbling and swirling utilizes a circling wash in said basket consisting of an axial vortex, whirling water flow that is combined with an upward high pressure spray return flow from the bottom section, the forming of which enables a rolling and gyrating water flow against the fruits and vegetables being washed; said axial vortex , whirling wash in said basket is utilized as a high pressure return flow that strikes vanes along the bottom section of the basket.

The features of said fruit and vegetable washing and disinfecting method include: Before conducting said wash procedure, a low water level spray wash procedure occurs, said low water level is lower than the water level at the bottom section of said washing basket, and in which a high pressure return flow striking the vanes along the bottom section of said washing basket causes said basket to rotate and, at the same time, a high pressure spray return flow is delivered from the bottom section, center, and side surfaces of said basket against the fruits and vegetables for spray washing.

The features of said fruit and vegetable washing and disinfecting method include: Said wash process also includes, after the middle water level spray wash and water flow tumbling and swirling wash procedure, a high water level immersion, tumbling and swirling water flow wash procedure, said high water level is a water level that exceeds the height of the vegetables being washed such that all the fruits and vegetables float in the water, and in which a high pressure return flow and a high pressure spray return flow form a rolling and gyrating water flow such that the fruits and vegetables are immersed and churned.

The features of said fruit and vegetable washing and disinfecting method include: After said wash procedure is a spray rinse procedure, said spray rinse procedure under low water level conditions utilizes a high pressure return flow to hit said vanes along the bottom section of said basket, causing simultaneously the rotation of said basket and the opening of a water input valve, enabling clean tap water from an input water nozzle to be sprayed from the top and downward against the fruits and vegetables.

The features of said fruit and vegetable washing and disinfecting method include: Said high pressure spray return flow is fortified by the addition of ozone.

The features of said fruit and vegetable washing and disinfecting method include: Said high pressure return flow and high pressure spray return flow pressure is adjustable according to the kind of fruits and vegetables being washed.

A water-saving type fruit and vegetable washing and disinfecting device comprised of an upper cover, a case, and a bottom base; the case has disposed within a wash trough, the wash trough has disposed within a rotatable basket, the bottom base has disposed within an ozone generator and water pumps, and on the side surface of the wash trough is a water level controller, the features of which include:

Said wash trough has disposed in its bottom section a return flow water discharge port, a water discharge valve drain pipe, and numerous spray ports; positioned at the center of the bottom section is a multi-orifice spray spindle, the lateral wall of which has numerous arrayed spray ports, and also disposed near the side wall of the bottom section is a return flow water input port.

A return flow water pump, its water input port connected to said return flow water discharge port, and its water output port connected to said return flow water input port.

A return flow spray pump, its water input port connected to said return flow water discharge port and its water output port is connected to said numerous bottom section spray ports, said numerous arrayed lateral wall spray ports, and said multi-orifice spray spindle.

The features of said water-saving type fruit and vegetable washing and disinfecting device include: Said wash trough has projecting from its center section an annular recess, the annular recess has disposed on it a filter screen; said centered multi-orifice spray spindle is situated in said annular recess center section and protrudes therefrom, said bottom section has multiple flushing orifices disposed in the annular recess, and all of its sides protrude from the center section.

The features of said water-saving type fruit and vegetable washing and disinfecting device include: Said water level controller is a tube-type, magnetic float water level controller having disposed on it high, middle, and low water level sensing rings.

The features of said water-saving type fruit and vegetable washing and disinfecting device include: Said basket is rotatably disposed on said multi-orifice spray spindle at the center of said wash trough and along the bottom circumference of said basket are disposed return flow vanes, said return flow vanes oriented towards said return flow water input port.

The features of said water-saving type fruit and vegetable washing and disinfecting device include: Said centered multi-orifice spray spindle has a bottom mount, the bottom mount is fixed to the bottom section center area of said wash trough, said centered multi-orifice spray spindle goes through the bottom mount and extends to the water input port at the lower extent of said trough; the upper end of said centered multi-orifice spray spindle is a conical entity, the columnar body of which is from bottom to top of a hollow design, wherein the top end is not penetrated, and the water input port at its lower extent is coupled to the water input pipe; spirally arrayed from top to bottom on its columnar body surface are round and/or oval holes.

The features of said water-saving type fruit and vegetable washing and disinfecting device include: Said numerous bottom section and lateral wall spray ports of said wash trough are differently angled round and/or oval holes.

The features of said water-saving type fruit and vegetable washing and disinfecting device include: Said basket is a reticulated cylindrical structure that is composed of, from top to bottom, a plurality of intervallic circular flat, thin horizontal members and circumferentially placed vertical members; the basket lid consists of a plurality of vertical, straight radial plates and annular elements forming a reticulated cover, its inner surface of a centered concave, arcuate shape; and at the conjoinment area of the basket and the basket lid is a retaining device.

The features of said water-saving type fruit and vegetable washing and disinfecting device include: Said return flow water pump and flushing water pump drive motor is a variable speed motor.

The advantages of the invention herein are:

(1) The utilization of a high and low water level controller, utilizing computer control, that according to different washing procedures conducts high, middle, and low water level spray washing, spray tumbled water flow washing, and immersion and spray rinse washing based on programs set to execute water input, drying, water discharge, and foreign matter discharge processes to achieve the objective of higher efficiency, water-saving washing.

(2) During the washing of fruits and vegetables using a high, middle, or low water level to conduct the wash, when the low water level starts the return flow device, the basket rotates, and the centered multi-orifice spray spindle as well as the wash trough wall and trough bottom spray powerful water columns and ozone to scour the fruits and vegetables; since the water level is below the basket, the water columns sprayed are not impeded such that the vigorous washing of the fruits and vegetables is still possible with a reduced volume of water.

(3) During the high water level return flow wash, the water flow ozone bubbles are capable of decomposing, disinfection and washing.

(4) A uniquely designed fruit and vegetable basket arrangement utilizing physics principles, wherein the centered spindle is situated in a center balance recess and return flow vanes are disposed along the bottom circumference of the basket such that when water columns strike the vanes, the generated force causes the rotation of the basket to achieve the water flow washing of the fruits and vegetables, thereby washing off dirt and foreign matter on the fruits and vegetables.

(5) The utilization of low resistance, peak, single-point friction as well as reduced rotative torsion which by means of this unique low friction arrangement enables the rotation of the basket to generate centrifugal force against the fruits and vegetables for the drying treatment.

(6) When the return flow device is started, ozone gas conveyed with the water flow dissolves in the water, enabling disinfection as well as the elimination of agricultural chemicals and poisons on the surfaces of the fruits and vegetables.

(7) When utilized in frigid climates where fruit and vegetable washing inconvenient, the product herein completely improves the inconvenience drawbacks by freeing both hands and providing for easy washing.

(8) The invention herein is a high utility, physics-principle based technological product that conserves water and electricity, while also providing for high productivity applications.

(9) The basket lid is of a concave, arcuate design that allows, during washing, the complete immersion of the floating fruits and vegetables, thereby enabling thorough washing and the decomposition of agricultural chemicals and poisons.

In summation of the foregoing section, the invention herein is a high utility, high economic value, and optimized fruit and vegetable washing and disinfecting machine that completely improves manual washing inconveniences as well as the technological inadequacy shortcomings of existent washing machines.

### BRIEF DESCRIPTION OF THE DRAWINGS

Figure 1 is a flow chart of the washing method of the invention.

Figure 2 is an exploded drawing of the invention and

Figure 3 is a cross-sectional drawing of the invention

### DETAILED DESCRIPTION OF THE INVENTION

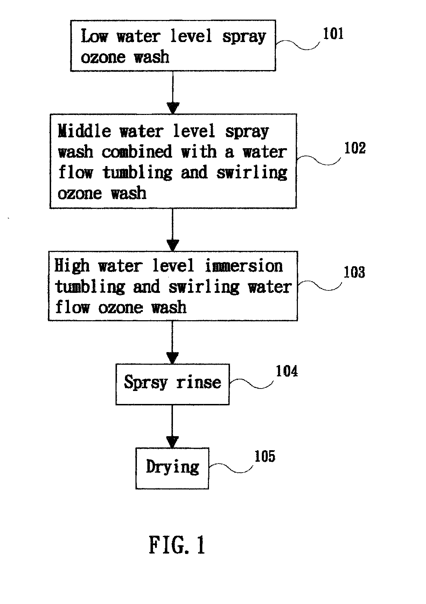

FIG. 1 is the washing method flow chart of the invention herein. The method consisting of a low water level spray ozone wash 101, a middle water level spray wash combined with a water flow tumbling and swirling ozone wash 102, a high water level immersion tumbling and swirling water flow ozone wash 103, a spray rinse 104, and a drying 105 procedure. Each procedure of said washing method during general use is based on the kind of fruit and vegetable being washed, the degree of dirtiness, or the forward or backward adjustment of the sequence.

The objective of the invention herein is to provide a highly efficient water-saving fruit and vegetable washing and disinfecting method that significantly utilizes a lower than usual fruit and vegetable washing water level, middle water level in which to conduct washing that also utilizes a combination spray wash and water flow washing method, and to increase washing efficiency, enabling fruits and vegetables being washed to receive equal exposure to the water flow and spray, especially provides a tumbling and swirling water flow washing method, thereby achieving the objective of a combination high efficiency water-saving spray wash and water flow washing method.

Said middle water level of the invention herein reaches the exact height needed for the fruits and vegetables being washed to float in the water level; and, to enable the equal exposure of all the fruits and vegetables being washed and, furthermore, to the high efficiency, high-speed wash; said spray wash is delivered multi-directionally and multi-angularly from the center of the group of fruits and vegetables being washed, washing the fruits and vegetable from all sides, and in combination the fruits and vegetables being washed revolve, said revolving of the fruits and vegetables being washed inducing return flow and raising the pressure, and via the oppositely juxtaposed expert design of the vanes 24 along the bottom section of the basket 23, the striking of the vanes 24 causes a return flow into a water input port 17; said water flow tumbling and swirling utilizes a circling wash in the basket 23 consisting of an axial vortex, whirling water flow that is combined with, from the bottom section, an upward high pressure spray return flow, the forming of which enables a rolling and gyrating water flow against the fruits and vegetables being washed.

In the method of the invention herein, before conducting the wash procedure 102, a low water level spray wash procedure 101 occurs for the further saving of water that utilizes a water level that is lower than the water level at the bottom section of the washing basket 23, and in which a high pressure return flow striking the vanes 24 along the bottom section of the washing basket 23 causes the rotation of the basket and, at the same time, from the basket 23 bottom section, center and side surface, a high pressure spray return flow is directed against the fruits and vegetables for spray washing. The objective is to clean off sediment adhering to the vegetable and fruits, especially in the case of heavily soiled potatoes, sweet potatoes, turnips, carrots, and leafy vegetables.

Said wash process 102 also includes, after the middle water level spray wash and water flow tumbling and swirling wash procedure 102, a high water level immersion tumbling and swirling water flow wash procedure 103, said high water level is a water level that exceeds the height of the vegetables being washed such that all the fruits and vegetables float in the water, and in which is used a high pressure return flow and a high pressure spray return flow forming a rolling and gyrating water flow such that the fruits and vegetables are immersed and churned to further wash off dirt on the fruit and vegetable surfaces.

After the wash procedure 103 is a spray rinse procedure 104, said spray rinse procedure 104, under low water level conditions, uses a high pressure return flow to hit the vanes 24 along the bottom section of the washing basket 23, causing at the same time the rotation of the basket 23 such that a water input valve 14 opens, enabling clean tap water from an input water nozzle to be sprayed from the top and downward against the fruits and vegetables. Said input water nozzle may be designed as flared shape such that water is sprayed in a fan shape, thereby increasing the area sprayed and enhancing efficiency.

Said high pressure spray return flow is fortified by the addition of ozone. Its functions are: 1. Ozone is capable of decomposing disinfection and washing and 2. Ozone in highly pressurized water forms minute bubbles in passageways and in a short time enters the wash trough 03 and, as the water pressure decreases, the minute bubbles rapidly multiply and explode, promoting the elimination of dirt from the fruit and vegetable surfaces.

Said high pressure return flow and high pressure spray return flow pressure can be adjusted according to the fruits and vegetables being washed.

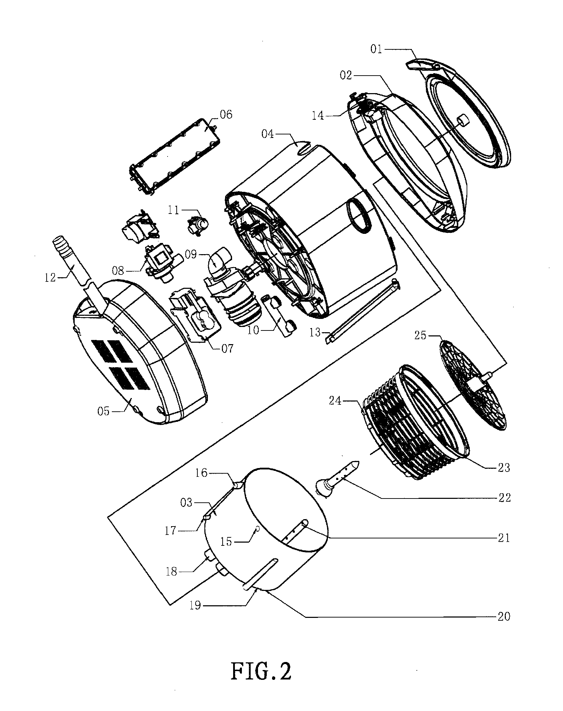

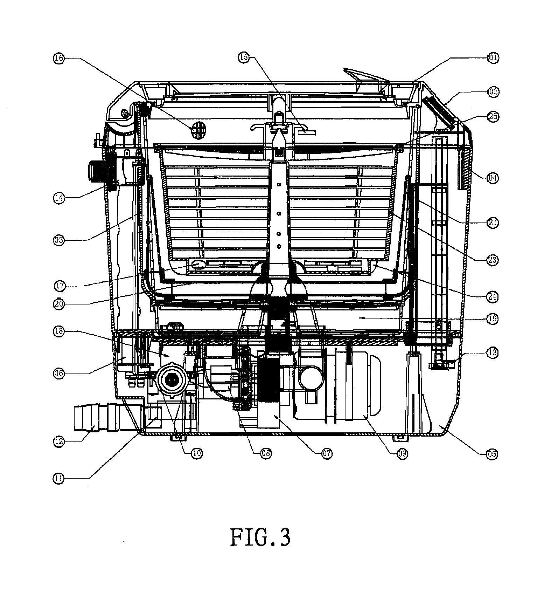

FIG. 2 and FIG. 3 are the exploded drawing and the cross-sectional drawing of the water-saving type fruit and vegetable washing and disinfecting device provided by the invention herein, as viewed in the drawings, the fruit and vegetable washing and disinfecting device of the present invention is comprised of an upper cover 01, a case 04, and a bottom base 05; the case 04 has disposed within a wash trough 03, the wash trough 03 has disposed within a basket 23, the bottom base 05 has disposed within an ozone generator 06 and water pumps (including a return flow water pump 08 and a flushing water pump 09), and between the wash trough 03 and the case 04 is disposed a water level controller 13. Projecting from the center section of said wash trough 03 is an annular recess 19, the annular recess 19 has disposed on it a filter screen, below the recess [19] is a return flow water discharge port 18, the wash trough 03 bottom section has multi-angled flushing orifices 20, the wash trough 03 sides have multi-angled flushing orifices 21, and the wash trough 03 has disposed upwards from its center a multi-orifice spray spindle 22. Said centered multi-orifice spray spindle 22 is situated in the center section of said annular recess 19 and protrudes therefrom, and said bottom section multiple flushing orifices 20 are disposed in the annular recess 19 and all of its sides protrude from the center section. The wash trough 03 has disposed under its lateral walls a return flow water input port 17 and the wash trough 03 also has on it a tap water input opening 15, said tap water input opening 15 is connected to the flared tap water spray nozzle, enabling water to be sprayed in a fan shape, thereby increasing the sprayed area and enhancing efficiency. Said bottom base 05 has disposed internally an ozone generating device 06, an air pump 07, a flushing water pump 09, a return flow water pump 08, a water discharge system 10, a water discharge device 11, and a waste water drain pipe 12. Said return flow water pump 08 water input port connects to the wash trough 03 return flow water discharge port 18, and the return flow water pump 08 water output port connects to the wash trough 03 return flow water input port 17; said flushing water pump 09 water input port connects to the wash trough 03 return flow water discharge port 18, the flushing water pump 09 water output port connects to the centered multi-orifice spray spindle 22 as well as the wash trough 03 bottom section and lateral wall spray ports.

Said centered multi-orifice spray spindle 22 has a bottom mount, the bottom mount is fixed to the center area of the wash trough 03 bottom section, the centered multi-orifice spray spindle 22 goes through the bottom mount and extends to the water input port 17 at the lower extent of the trough 03; the upper end of the centered multi-orifice spray spindle 22 is a conical entity, the columnar body of which is from bottom to top of a hollow design, wherein the top end is not penetrated and the water input port 17 at its lower extent is coupled to the water input pipe; spirally arrayed from top to bottom on the columnar body surfaces are round and/or oval holes. Said wash trough 03 bottom section and lateral wall spray ports are differently angled round and/or oval holes.

Said device case 04 has disposed within the water level controller 13 and a water input valve 14. Said water level controller 13 is a tube-type, magnetic float water level controller having disposed on it high, middle, and low water level sensing rings for controlling as required high, middle, and low operating water levels.

Said basket 23 is rotatably disposed on the multi-orifice spray spindle 22 at the center of said wash trough 03, and along the circumference of the basket 23 are disposed return flow vanes 24, said return flow vanes 24 oriented towards the return flow water input port 17. After said basket lid 25 is placed onto the basket 23, it is tightly fitted and cannot be dislodged during washing. The basket 23 bottom center has disposed a hole that ensleeves the centered multi-orifice spray spindle 22 when it is inserted into the wash trough 03.

Said basket 23 is a reticulated cylindrical structure that is composed of, from top to bottom, a plurality of intervallic circular flat, thin horizontal members and circumferentially placed vertical members and, as such, the design objective is to facilitate the spraying of water from the wash trough 03 lateral wall spray ports into the basket 23, reducing during the rotation of the basket 23 the obstruction of sprayed water from the spray spindle 22; said basket lid 25 consists of a plurality of vertical, straight-element radial plates and annular elements forming a reticulated cover, its inner surface of a centered concave, arcuate shape; at the conjoinment area of the basket 23 and the basket lid 25 is a retaining device. To facilitate the full immersion of the floating fruits and vegetables in the water, it is also possible when spraying for water to be admitted into the basket 23 to achieve the objective of washing.

At the top of the device is a control plate 02 on which is disposed a microcomputer control panel having setting keys and start keys for washing, disinfecting, drying and other programs, as well as time and fruit and vegetable type.

In the drawings of the embodiments, the wash trough 03 has disposed on it a high water level overflow port 16 through which excess water is automatically discharged.

In the drawings of the embodiments, the wash trough 03 spray ports, the peripheral spray ports 21, and the spray ports 20 water spurt through the basket 23 intervals to sprinkle and thereby wash the fruits and vegetables in the basket 23.

Said return flow water pump 08 drive motor is a variable speed motor, and varying the water pump drive motor speed changes the sprayed return flow water pressure for adapting to different fruit and vegetable washing pressures as variously required; for example, water pressure against leafy vegetables should not be excessively high, otherwise leafy vegetable damage will be quite extensive; while tuberous vegetables require higher water pressure.

Said ozone generator 06 produces ozone gas that is delivered by the air pump 07 and, via a pipe connected to the flushing water pump 09, conveyed to the centered multi-orifice spray spindle 22 and the wash trough 03 lateral wall spray ports into the wash trough 03.

During the low water level spray wash operation 101, the tap water pipe is connected to the input water device, the washing mode is set, the start key is pressed, and the microcontroller opens the water input valve 14, allowing clear fresh water from the tap water input opening 15 on the wash trough 03 to pour into the wash trough 03, and by the water level controller 13, control the low water level wash 101, wherein the return flow water pump 08 begins to operate, water from the return flow water discharge port 18 is drawn into the return flow water pump 08 and, after having its pressure increased, then via the water pipe the water is pumped into the return flow water input port 17 to the wash trough 03, at which time the water columns directly strikes the return flow vanes 24, enabling the rotation of the basket 23 and, at the same time, water is admitted from the return flow water discharge port 18 and drawn into the flushing water pump 09 and, after having its pressure increased, poured into the centered multi-orifice spray spindle 22, the peripheral spray ports 21 and the bottom section the spray ports 20. Since there is no water resistance in the trough 03, this enables water column strength to be greater and the water column surges from different angles against the fruits and vegetables in the basket 23 such that dirt and foreign matter clinging to fruit and vegetable surfaces are washed cleanly away and, at the same time, the ozone generator 06 produces ozone which is via the air pump 07 conveyed into the flushing water pump 09 water pipe and dissolved in the water therein and then delivered through the water pump 09 into the wash trough 03, engendering a large volume of bubbles that break down and eliminate agricultural chemicals and poisons, thereby achieving the preliminary cleaning of the fruits and vegetables. When the set time is reached, the water discharge electromagnetic valve 11 drains the water.

In the middle water level combination tumbling and swirling washing operation 102, the microcomputer is initialized, clear fresh water is poured in, and when the middle water level is reached, the return flow water pump 08, the flushing water pump 09, and the ozone generator 06 are started, producing a water flow water column that rotates the basket 23, the rotating water flow and the bottom section sprayed water flow forming a tumbling and swirling water flow that causes the fruits and vegetables to gyrate and roll, the wash trough 03 center and lateral wall numerous spray ports spewing water columns against the fruits and vegetables to wash them. At the same time, the air pump 07 conveys the ozone produced by the ozone generator 06 into the flushing water pump 09 output ports, causing the emission of a sprayed water column containing minute ozone bubbles that are capable of washing the fruits and vegetables, fully disinfecting and decomposing agricultural chemicals and removing dirt. When the set time is reached, the water discharge electromagnetic valve 11 drains the water.

In the high water level immersion and washing operation 103, the microcomputer is initialized, clear fresh water is poured in up to the high water level, during the filling up to the high water level (if the water level is too high, the excess is automatically drained away by the overflow port 16), the microcontroller automatically starts the return flow water pump 08, the flushing water pump 09, and the ozone generator 06, producing a water flow water column washing effect and causing basket 23 rotation to execute full water level, deep immersion washing. With the water unceasingly oscillating to wash the fruits and vegetables, the ozone bubbles dissolve into minute bubbles capable of full disinfection and the decomposition of agricultural chemicals. When the set time is reached, the water discharge electromagnetic valve 11 drains the water.

In the spray rinse operation 104, the microcomputer is initialized, the water input valve 14 pours in water via the water input opening 15, producing a spray rinse means, wherein waste water is constantly discharged and clear fresh water is constantly poured in, at which time, the return flow water pump 08 still continues pressurization of water that strikes the return flow vanes 24 such that the basket 23 rotates uninterruptedly, the flushing water pump 09 also continuing water pressurization, resulting in the water column rinsing of the fruits and vegetables which achieves a cleansing effect and a second washing. The operation terminates when the time is reached and the water is discharged.

When the set washing program conducted is completed, the water discharge electromagnetic valve 11 discharges the water, discharging the water down to the low water level and, along the lower extent of the return flow vanes 24, the remaining clear fresh water enables the return flow water pump 08 to continue operating, the water columns striking the return flow vanes 24 causing the basket 23 to rotate, thereby generating centrifugal force that spins off water to achieve the objective of drying; after the set drying time is reached, the microcontroller automatically actuates the electromagnetic valve 11 to fully drain the water in the wash trough 03, thereby completing the washing process.

The invention herein, based on foregoing description, is a water-saving type fruit and vegetable cleaning and disinfecting device having extreme practical and economic value that revolutionizes fruit and vegetable washing for mankind.

## Claims

1. A water-saving type fruit and vegetable washing and disinfecting method, wherein the fruits and vegetables being washed are placed within a washing basket inside a fruit and vegetable washing and disinfecting device and, furthermore, said washing basket rotates around its center axis, the features of which include: The wash process utilizes a middle water level, as well as a spray wash used in combination with a water flow that tumbles and swirls to wash.

2. A water-saving type fruit and vegetable washing and disinfecting method as claimed in claim 1, wherein the features include: said middle water level reaches the exact height needed for the fruits and vegetables being washed to float in said water level; said spray wash is delivered multi-directionally and multi-angularly from the center of the fruits and vegetables being washed, washing the fruits and vegetable from all sides, and in combination the fruits and vegetables being washed revolve; said water flow tumbling and swirling utilizes a circling wash in said basket consisting of an axial vortex, whirling water flow that is combined with an upward high pressure spray return flow from the bottom section, the forming of which enables a rolling gyrating water flow against the fruits and vegetables being washed; said axial vortex, whirling washing action in said basket utilized a high pressure return flow to strike vanes at the bottom section of said basket.

3. A water-saving type fruit and vegetable washing and disinfecting method as claimed in claim 1, wherein the features include: prior to conducting said procedure, a low water level spray wash procedure is utilized, said low water level is set at lower than the water level at the bottom section of said washing basket and in which a high pressure return flow striking said vanes along the bottom section of said washing basket, activate said basket to rotate and, at the same time, a high pressure spray return flow is delivered from the bottom section, center and side surfaces of said basket against the fruits and vegetables for spray washing.

4. A water-saving type fruit and vegetable washing and disinfecting method as claimed in claim 1, wherein the features include: said wash process also includes, after conducting said middle water level spray wash and said water flow tumbling and swirling wash procedure, a high water level immersion tumbling and swirling water flow wash procedure follows, said high water level is a water level that exceeds the height of the basket being washed in such a way that all the fruits and vegetables float in the water, and in which a high pressure return flow and a high pressure spray return flow form a rolling and gyrating water flow enabled the fruits and vegetables to immerse and churn.

5. A water-saving type fruit and vegetable washing and disinfecting method as claimed in claim 1, wherein the features include: after said wash procedure a spray rinse procedure follows, said spray rinse procedure under low water level conditions uses a high pressure return flow to hit said vanes along the bottom section of said washing basket, causing simultaneously the rotation of said basket and the opening of a water input valve, enabling clean tap water from an input water nozzle to spray from the top and downward level against the fruits and vegetables.

6. A water-saving type fruit and vegetable washing and disinfecting method as claimed in claim 1 to claim 5, wherein the features include: said high pressure return flow and said high pressure spray return flow pressure can be adjusted according to the kind of fruits and vegetables being washed.

7. A water-saving type fruit and vegetable washing and disinfecting method as claimed in claim 1 to claim 5, wherein the features include: said high pressure spray return flow is fortified by the addition of ozone.

8. To implement the said method as claimed, a water-saving type fruit and vegetable washing and disinfecting device comprised of a an upper cover, a case, and a bottom base; said case has a wash trough, said wash trough has a rotatable basket, the bottom base has disposed within an ozone generator and water pumps, and on the side surface of said wash trough is a water level controller, the features of which include: said wash trough has a return flow water discharge port in its bottom section, a water discharge valve drain pipe, and numerous spray ports; positioned at the center of the bottom section is a multi-orifice spray spindle, the lateral wall of which has numerously arrayed spray ports, and also disposed near the side wall of the bottom section is a return flow water input port; a return flow water pump, its water input port is connected to said return flow water discharge port, and its water output port is connected to said return flow water input port ; a return flow spray pump, its water input port is connected to said return flow water discharge port, and its water output port is connected to said numerous bottom section spray ports, said numerously arrayed lateral wall has spray ports, and said multi-orifice has a spray spindle.

9. A water-saving type water-saving type fruit and vegetable washing and disinfecting device as claimed in claim 8, wherein the features include: said wash trough has projecting from its center section an annular recess, the annular recess has disposed on it a filter screen; said centered multi-orifice spray spindle is situated in said annular recess center section and protrudes therefrom, said bottom section has multiple flushing orifices disposed in the annular recess, and all of its sides protrude from the center section.

10. A water-saving type fruit and vegetable washing and disinfecting device as claimed in claim 8, wherein the features include: said water level controller is a tube-type, magnetic float water level controller having disposed on it high, middle, and low water level sensing rings.

11. A water-saving type fruit and vegetable washing and disinfecting device as claimed in claim 8, wherein the features include: said basket is rotatably disposed on said multi-orifice spray spindle at the center of said wash trough, and along the bottom circumference of said basket return flow vanes are disposed, said return flow vanes oriented towards said return flow water input port.

12. A water-saving type fruit and vegetable washing and disinfecting device as claimed in claim 8, wherein the features include: said centered multi-orifice spray spindle has a bottom mount, said bottom mount is fixed to the bottom section center area of said wash trough, said centered multi-orifice spray spindle goes through the bottom mount and extends to said water input port at the lower extent of said trough; the upper end of said centered multi-orifice spray spindle is conical entity, the columnar body of which is from bottom to top of a hollow design, wherein the top end is not penetrated, and said water input port at its lower extent is coupled to said water input pipe; spirally arrayed from top to bottom on its columnar body surface are round and/or oval holes.

13. A water-saving type fruit and vegetable washing and disinfecting device as claimed in claim 8, wherein the features include: said numerous bottom section and lateral wall spray ports of said wash trough are differently angled round and/or oval holes.

14. A water-saving type fruit and vegetable washing and disinfecting device as claimed in claim 8, wherein the features include: said basket is a reticulated cylindrical structure that is composed of, from top to bottom, a plurality of intervallic circular flat, thin horizontal members and circumferentially placed vertical members; said basket lid consists of a plurality of vertical, straight radial plates and annular elements forming a reticulated cover, its inner surface of a centered concave, arcuate shape; and at the conjoinment area of said basket and said basket lid is a retaining device.

15. A water-saving type fruit and vegetable washing and disinfecting device as claimed in claim 8, wherein the features include: the drive motor of said return flow water pump and said flushing water pump is a variable speed motor.
